# DEMANDE DE BREVET EUROPEEN

(11) **EP 1 564 978 A1**
(43) Date de publication de la demande: **17.08.2005**
(21) Numéro de dépôt: 05290271.5
(22) Date de dépôt: 04.02.2005
(51) Int. Cl.: H04M 3/53

(54) **Système de messagerie multimédia**

(30) Priorité: 12.02.2004 FR 0450249
(71) Demandeur: FRANCE TELECOM, 75015 Paris (FR)
(72) Inventeur: Galipot, Francis, 91160 Ballainvilliers (FR); Loras, Frédéric, 78000 Versailles (FR)
(74) Mandataire: Stephann, Valérie Annabelle (FR)

(57) **Abrégé**

Système de messagerie multimédia, comprenant une messagerie (10) apte à recevoir un message multimédia provenant d'un terminal (A) d'un appelant et à le transmettre à un terminal (B1,B2,B3) d'un appelé abonné (B) audit système de messagerie multimédia.

Selon l'invention, ledit appelé (B) disposant d'au moins un terminal (B1,B2,B3) fonctionnant selon une configuration de communication donnée, ledit système de messagerie comprend des moyens d'adaptation destinés à transmettre ledit message multimédia audit terminal (B1,B2,B3) d'abonné (B) en fonction de modalités de communication associées à ladite configuration de communication.

Application aux messageries multimédia.

## Description

La présente invention concerne un système de messagerie multimédia.

L'invention trouve une application particulièrement avantageuse dans le domaine des services de communications interpersonnelles sur les réseaux de télécommunication fixes (RTC), mobiles (GPRS, UMTS), ainsi que pour le bas et le haut débit (ADSL).

Dans les systèmes existants de messagerie s'adressant à divers types de média de communication, le principe de consultation consiste, d'une part, à stocker dans une messagerie disposée dans un réseau de télécommunication un message provenant d'un terminal d'un appelant, et, d'autre part, pour un appelé abonné à ladite messagerie, à lire le message depuis son terminal d'abonné, la messagerie et le terminal de l'appelé abonné étant configurés de manière adaptée aux contraintes (débit, taille, qualité,...) imposées par le média de communication utilisé. Il résulte de cette contrainte d'adaptation que les messageries existant actuellement sont dédiées à un mode de communication donné ; il existe donc des messageries fixes pour la téléphonie fixe, des messageries mobiles pour la téléphonie mobile, etc.

Par conséquent, si un utilisateur dispose de plusieurs terminaux fonctionnant sur des médias de communication différents (téléphone fixe, téléphone mobile, réseau Internet ou ADSL,...), il doit souscrire des abonnements à autant de systèmes de messagerie, puisque, par exemple, il ne pourra pas lire sur son téléphone mobile un message laissé par un appelant à partir de son ordinateur personnel (PC) sur ADSL. En effet, les tailles d'images et les contraintes mémoire, voire même de complexité, sont trop grandes pour le téléphone mobile si l'appelant a prévu d'envoyer une image de qualité vidéo maximale sur un réseau de type ADSL.

Le problème technique à résoudre par l'objet de la présente invention est de proposer un système de messagerie multimédia, comprenant une messagerie apte à recevoir un message multimédia provenant d'un terminal d'un appelant et à le transmettre à un terminal d'un appelé abonné audit système de messagerie multimédia, qui permettrait à l'utilisateur abonné de consulter sur une messagerie unique tous les messages multimédia qui lui sont destinés, ceci quel que soit le média de communication utilisé pour consulter le message et quel que soit le terminal utilisé. En outre, l'invention se propose d'améliorer le contenu des messages consultés.

La solution au problème technique posé consiste, selon la présente invention, en ce que ledit appelé disposant d'au moins un terminal fonctionnant selon une configuration de communication donnée, ledit système de messagerie comprend des moyens d'adaptation destinés à transmettre ledit message multimédia audit terminal d'abonné en fonction de modalités de communication associées à ladite configuration et des moyens de traitement de qualité dudit message multimédia.

Ainsi, la messagerie du système conforme à l'invention devient en quelque sorte universelle au sens où elle est capable de répondre à toute consultation de l'appelé abonné utilisant l'un quelconque des terminaux dont il dispose. Pour cela, la messagerie adapte à chaque fois, à l'aide desdits moyens d'adaptation, le contenu du message stocké aux modalités, ou exigences, impliquées par le média de communication mis en oeuvre par le terminal utilisé par l'abonné.

En plus de l'adaptation de la transmission des messages multimédia aux terminaux d'abonnés, le système de messagerie traite la qualité des messages. A titre d'exemple, selon l'invention, les moyens de traitement de qualité comprennent, séparément ou en combinaison, des moyens de suppression de bruit, des moyens de suppression des effets du codage des médias, des moyens d'amélioration de la compression, des moyens d'ajout de fluidité, des moyens de correction d'erreurs de transmission.

Avantageusement, l'invention prévoit que, lesdites modalités concernant le débit de communication, lesdits moyens d'adaptation comprennent des moyens de scalabilité. Dans ce cas, l'adaptation de scalabilité permet dans une certaine mesure de transmettre le message multimédia à l'appelé selon un débit optimal, c'est-à-dire le mieux adapté au débit du terminal utilisé par l'abonné pour consulter sa messagerie.

Selon un premier mode de réalisation de l'invention, lesdits moyens de scalabilité sont appliqués lors de la réception du message multimédia. Il s'agit donc d'une opération effectuée en temps réel suite par exemple à une négociation entre le terminal de l'appelant et la messagerie lorsqu'en l'absence de l'appelé le message multimédia est redirigé vers la messagerie.

Selon un deuxième mode de réalisation de l'invention, lesdits moyens de scalabilité sont appliqués après réception du message multimédia. Il s'agit là d'un traitement différé, ou post-traitement, réalisé le plus souvent au moment où l'abonné consulte sa messagerie, conformément aux conditions de son abonnement.

L'adaptation de la messagerie au média de communication utilisé par le terminal de consultation de l'abonné n'est pas limitée à la seule scalabilité, mais s'étend à d'autres caractéristiques techniques. Il est notamment prévu par l'invention que, lesdites modalités concernant la taille d'images, lesdits moyens d'adaptation comprennent des moyens de conversion d'images.

Les traitements relatifs à la qualité des messages peuvent être effectués en fonction des choix faits par l'abonné. Pour cela, ladite messagerie dispose de moyens de sélection par l'appelé abonné desdits moyens d'adaptation et/ou desdits moyens de traitement de qualité, l'ensemble des moyens sélectionnés constituant un abonnement pour l'appelé.

De cette manière, à chaque fois que l'abonné consulte sa messagerie multimédia, cette dernière effectue automatiquement les traitements préalablement sélectionnés par l'abonné lors de sa prise d'abonnement, selon un mode de « pilotage automatique » du service.

Cependant, l'abonné peut, s'il le désire, opter à l'occasion pour un « pilotage manuel » du service si, comme l'invention le propose, ladite messagerie comprend des moyens de dérogation de l'appelé abonné à son abonnement. L'abonné a ainsi la possibilité de choisir dynamiquement le message multimédia le plus optimisé en qualité vidéo, débit, etc, en fonction du terminal utilisé.

Parmi les nombreux choix ouverts à l'abonné utilisateur, on trouve celui de recevoir des messages dits sponsorisés pour lesquels l'abonné accepte que les messages consultés soient entrecoupés d'annonces diverses. C'est pourquoi l'invention dispose que ledit système de messagerie comprend des moyens d'insertion d'annonces dans le message multimédia.

La description qui va suivre en regard des dessins annexés, donnés à titre d'exemples non limitatifs, fera bien comprendre en quoi consiste l'invention et comment elle peut être réalisée.

La figure 1 est un schéma de configuration de mise en oeuvre du système de messagerie mulitimédia conforme à l'invention.

La figure 2 est un schéma de configuration d'une communication point à point dans le réseau vers un système de messagerie mulitimédia conforme à l'invention.

La figure 3 est un schéma d'un processus de post-traitement d'un message enregistré dans le réseau au moyen d'un système de messagerie multimédia conforme à l'invention.

La figure 4 est un schéma illustrant des exemples de consultation d'un message multimédia dans le réseau au moyen d'un système de messagerie conforme à l'invention.

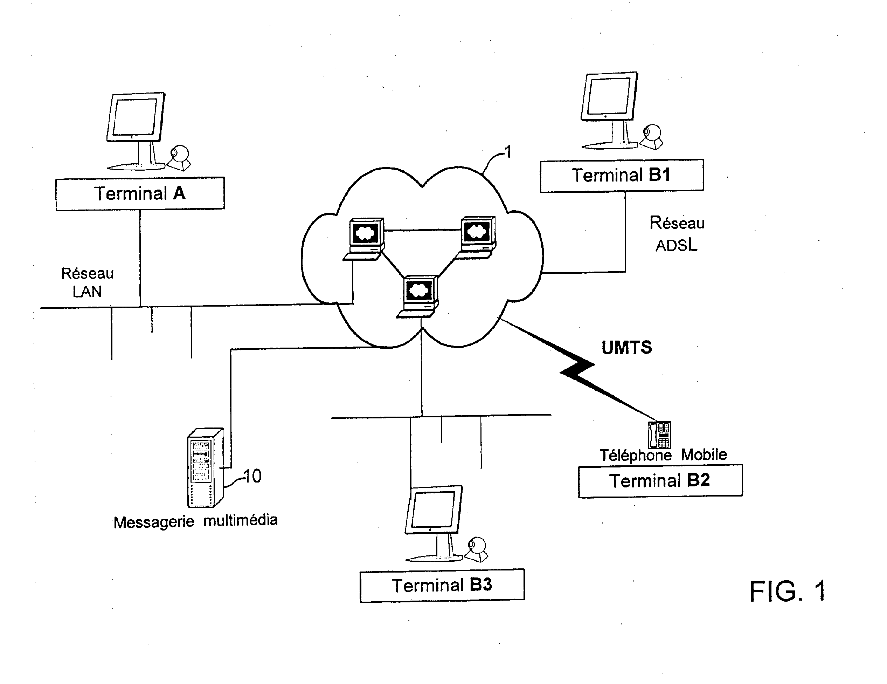

Sur la figure 1 est illustré une configuration de mise en oeuvre d'un système de messagerie multimédia dans le cas d'une communication visiophonique entre deux correspondants A et B.

Le correspondant A, l'appelant, utilise un terminal A qui, dans cet exemple, est un ordinateur personnel (PC) sur réseau LAN et cherche à joindre le correspondant B, l'appelé, lequel dispose, par exemple, de trois terminaux fonctionnant chacun selon une configuration de communication donnée, à savoir, dans cet exemple, un terminal B1 qui est un PC sur ADSL à son domicile, un terminal B2 qui est un téléphone mobile UMTS et un terminal B3 qui est un PC sur réseau LAN dans son entreprise.

La chaîne de codage vidéo du terminal A, non représentée, comprend un module de capture de l'image vidéo qui peut être simplement une caméra vidéo mais également toute autre source multimédia disponible comme photos numériques, fichiers électroniques (traitement de texte, fichier AVI,...). La source vidéo est suivie d'un module d'encodage et d'un module de transmission de l'image vidéo vers le réseau 1 de télécommunication. Bien entendu, cette chaîne de codage dépend du terminal A et de sa configuration.

On supposera que l'appelé B n'est pas disponible ou joignable sur aucun de ses terminaux Bn (n=1, 2, 3) et qu'il s'est connecté au système de messagerie multimédia auquel il est abonné. Ce système comprend notamment une messagerie 10 reliée au réseau 1 de télécommunication.

D'une manière générale, la messagerie multimédia 10 est multi-protocoles (H323, H324, SIP,...) et multi-formats (SQCIF, QCIF, CIF,...) et permet donc de lire et d'enregistrer la source vidéo transmise par le terminal A sous plusieurs formats et sous plusieurs protocoles, en fonction de la chaîne de codage du terminal A et du réseau de connexion (ADSL, UMTS,...).

Dans la suite de la description, pour des raisons de simplification, on ne considèrera que des communications au protocole H323 et au format CIF, et plus particulièrement l'image vidéo émise par le terminal A qui sera stockée dans la messagerie multimédia 10 de l'abonné B. Les autres médias intervenant dans la communication, tels que la partie audio des messages, ne seront pas explicitement traités dans les exemples qui suivent, mais implicitement, par analogie avec la partie vidéo.

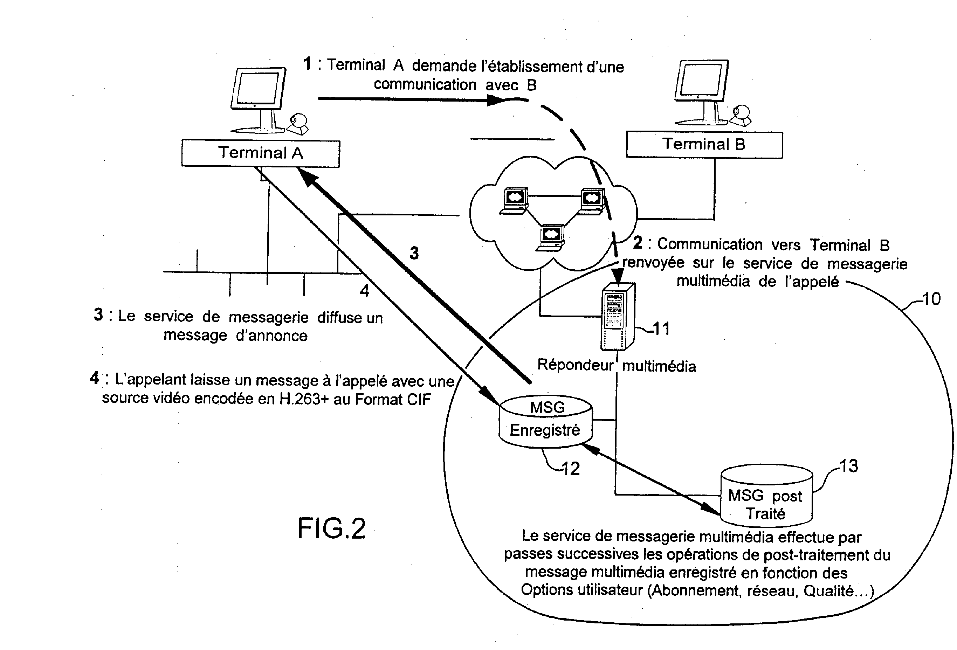

Le déroulement d'une séquence de communication multimédia mettant en oeuvre le système de messagerie multimédia conforme à l'invention s'effectue de la manière suivante en référence à la figure 2.

L'appelant A cherche à joindre (1) l'appelé B lequel n'est pas disponible pour établir la communication et a donc activé son service de messagerie multimédia qui se trouve sur le réseau 1, mais qui pourrait tout aussi bien être local.

L'appelant A est alors renvoyé (2) sur la messagerie 10 de l'appelé B et la communication s'établit entre le terminal A de l'appelant et la messagerie 10 de l'appelé. La négociation protocolaire entre le terminal A et la messagerie 10 va permettre à l'appelant de laisser un message multimédia dont le flux vidéo est, dans l'exemple choisi, encodé en H263+ (Norme UIT-T de compression vidéo : recommandation H.263 02/1998) au format initial CIF (352x288 pixels).

Le répondeur 11 du service de messagerie multimédia diffuse éventuellement (3) vers l'appelant A un message d'annonce l'informant de l'indisponibilité de son correspondant et l'invite à lui laisser un message. L'appelant A laisse (4) un message à l'appelé B sur sa messagerie 10. Le message multimédia est stocké dans une mémoire 12 de la messagerie 10.

Le système de messagerie multimédia met alors en oeuvre, dans une unité 13 de traitement, un ensemble d'opérations concernant, d'une part, l'adaptation du message aux modalités de communication associées à la configuration du ou des terminaux Bn de l'appelé B, et d'autre part, la qualité du message multimédia à transmettre à l'abonné B. Ces différentes opérations de traitement du message sont effectuées en fonction des options de l'abonné B, la messagerie 10 disposant de moyens de sélection par l'appelé abonné B des moyens d'adaptation et/ou des moyens de traitement de qualité de l'unité 13 de traitement, l'ensemble des moyens sélectionnés constituant un abonnement pour l'appelé B.

En matière d'adaptation, l'abonné peut décider dans son abonnement d'appliquer au message multimédia qui lui sera restitué un traitement de scalabilité qui permet une réémission optimisée des messages en terme de débit de communication par envoi d'un flux de base et d'éventuelles couches d'amélioration en fonction du terminal Bn utilisé.

Ce traitement de scalabilité pourra être réalisé lors de la réception du message de l'appelant A par négociation, ou après la réception du message, en post-traitement dans l'unité 13 de traitement.

L'adaptation peut également porter sur la taille d'images, dans ce cas les moyens d'adaptation de la messagerie comprennent des moyens de conversion d'images.

Concernant l'amélioration de qualité du message multimédia lui-même, l'unité 13 de traitement de la messagerie est apte à effectuer, séparément ou en combinaison selon l'abonnement souscrit par l'appelé B, les opérations de suppression de bruit, de suppression des effets du codage des médias, d'amélioration de la compression, d'ajout de fluidité, de correction d'erreurs de transmission.

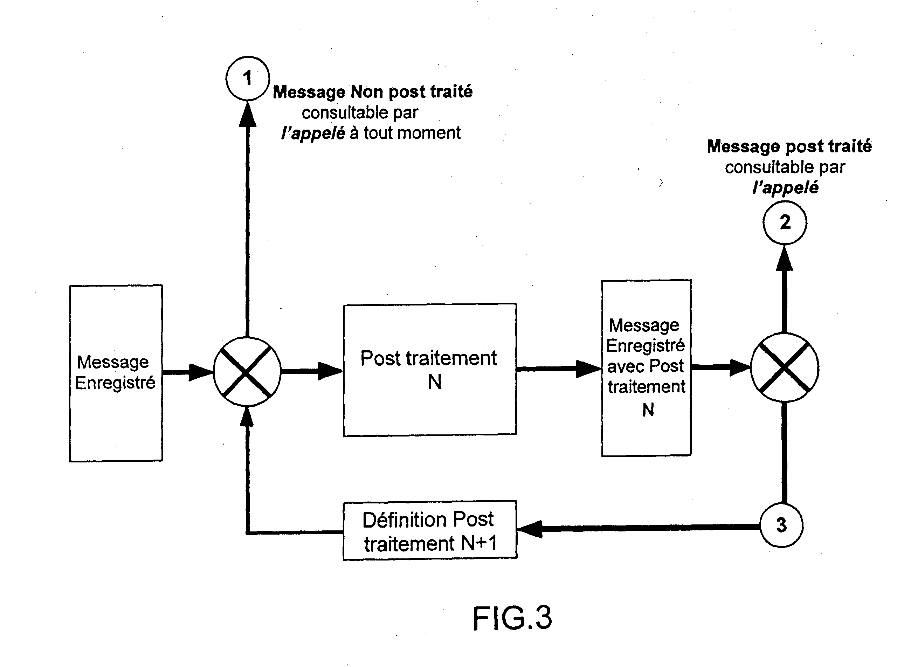

Un processus de post-traitement par l'unité 13 d'un message enregistré dans la mémoire 12 va maintenant être décrit en regard de la figure 3.

Tout d'abord, il faut bien considérer que le message tel qu'enregistré dans la mémoire 12 par l'appelant A reste toujours disponible pour l'appelé B. Dans ce cas, le message ne subit aucun traitement et sera consultable à tout moment. Cette situation correspond à la sortie 1 de la figure 3.

Si l'abonné B en a décidé, le message entre en phase de post-traitement qui se déroule conformément aux opérations de traitement sélectionnées par l'appelé B lors de sa prise d'abonnement. Les choix de l'abonné porte sur les traitements qu'il souhaite voir effectuer par l'unité 13 ainsi que sur l'ordre de ces traitements lorsqu'il utilise l'un de ses terminaux Bn.

Des exemples de post traitement sont donnés dans la liste ci-dessous :

| | |
|---|---|
| Post-traitement N=1 | suppression des effets de blocs |
| Post-traitement N+1 | suppression du bruit |
| Post-traitement N+2 | amélioration de la compression |
| Post-traitement N+3 | ajout de fluidité à la vidéo |
| Post-traitement N+4 | correction améliorée des erreurs de transmission |
| Post-traitement N+5 | ajout d'une couche de scalabilité |
| Post-traitement N+6 | ajout d'un sponsor |

etc.

Cette liste n'est pas exhaustive, de même que l'ordre des opérations n'est pas établi et dépend du choix de l'abonné B et du terminal Bn utilisé pour consulter sa messagerie multimédia.

Lorsqu'il entre en phase de post-traitement, le message subit en premier lieu le post-traitement noté N. Le message enregistré ainsi traité est disponible pour l'appelé B aussitôt le post-traitement N effectué. Dans ce cas, correspondant à la sortie 2 de la figure 3, le message post-traité de rang N peut être consulté par l'appelé.

Si aucune demande de consultation du message n'est faite par l'appelé B, alors le processus de post-traitement se poursuit par la mise en oeuvre du post-traitement de rang N+1 (sortie 3 de la figure) et ceci tant que l'appelé abonné B n'a pas demandé de consulter son message.

Ces options de messagerie permettent de définir une stratégie de post-traitement pour les messages de l'appelé B à savoir, à simple titre d'exemple :
- Post-traitement 1 : suppression des effets de blocs
- Post-traitement 2 : création d'un contenu multi-format pour consultation multi-terminaux hétérogènes, par exemple en utilisant la technique de scalabilité vidéo appliquée au message pour les formats adaptés aux terminaux Bn de l'appelé :
   Couche de base 64Kbits format QCIF pour le terminal B2
   Couche d'amélioration 256Kbits format QCIF pour le terminal B1
   Couche d'amélioration 384Kbits format CIF pour le terminal B3
- Post-traitement 3 : ajout d'un sponsor.

Il est important de noter que selon un mode de pilotage dit manuel, l'abonné peut déroger à tout moment aux options qu'il a sélectionnées au départ lorsqu'il a souscrit son abonnement.

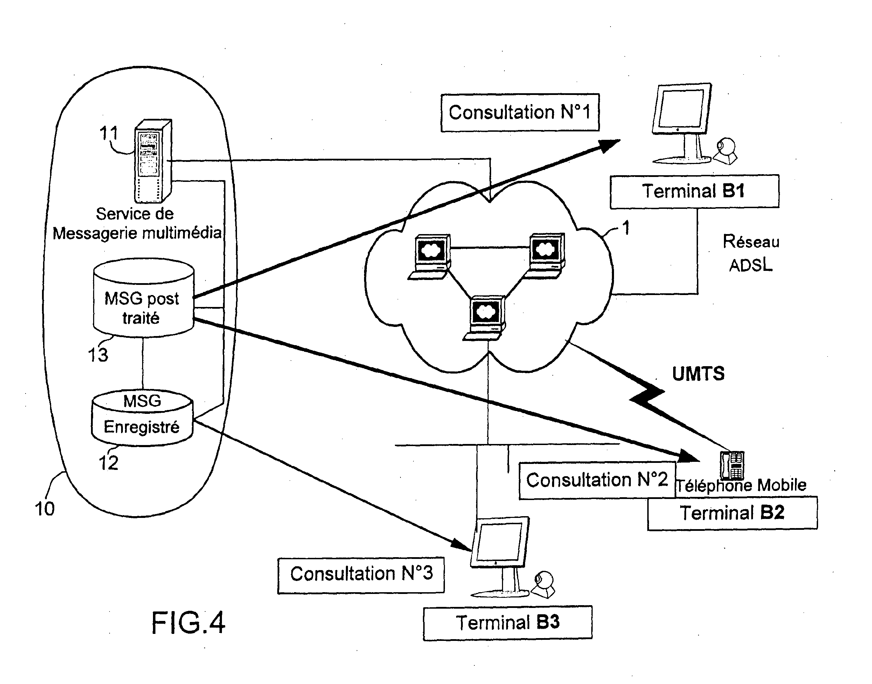

C'est ce qui va maintenant être illustré à l'aide du schéma de la figure 4 qui donne trois exemples pratiques de consultation qu'un abonné peut demander à sa messagerie multimédia à partir de l'abonnement défini ci-dessus.

Consultation n°1: l'appelé B désirant consulter ses messages multimédia depuis son terminal B1 se connecte au service de messagerie multimédia via une page Web de consultations des messages.

Le service indique à l'abonné B les informations d'origine, d'horaire des messages enregistrés disponibles, ainsi que leur niveau de post-traitement pour le terminal B1. L'appelé B choisit dans la page Web le niveau de consultation du message en fonction des post-traitements réalisés (qualité, coût,...).

Suivant le choix de l'abonné, le message est joué en fonction du niveau de consultation souhaité. Par exemple ici l'appelé B décide de consulter son message avec sponsorisation.

Dans ce cas, le service de messagerie fournit le message post-traité avec :
- Amélioration de la qualité vidéo (suppression des effets de blocs)
- Couche d'amélioration de la vidéo pour le terminal B1 (256Kbits QCIF sur ADSL)
- Ajout d'un sponsor.

Consultation n°2 : l'appelé B désirant consulter ses messages depuis le terminal B2 se connecte au service de messagerie multimédia.

Le service lui indique les informations d'origine, d'horaire des messages enregistrés disponibles, ainsi que leur niveau de post-traitement pour le terminal B2. L'appelé B choisit par des séquences DTMF le niveau de consultation du message en fonction des post-traitements réalisés (qualité, coût...).

Suivant le choix de l'abonné B, le message est joué en fonction du niveau de consultation souhaité. Par exemple ici, l'appelé B décide de consulter son message sans sponsorisation. Dans ce cas, le service de messagerie fournit le message post-traité avec :
- Amélioration de la qualité vidéo (suppression des effets de blocs)
- Couche de base de la vidéo pour le terminal B2 (64Kbits QCIF sur UMTS).

Consultation n°3 : l'appelé B désirant consulter ses messages depuis le terminal B3 se connecte au service de messagerie multimédia via une page Web de consultation des messages.

Le service lui indique les informations d'origine, d'horaire des messages enregistrés disponibles, ainsi que leurs niveaux de post-traitement pour le terminal B3. L'appelé choisit dans la page Web le niveau de consultation du message en fonction des post-traitements réalisés (qualité, coût...).

Suivant le choix de l'abonné B, le message est joué en fonction du niveau de consultation souhaité. Par exemple ici, l'appelé B décide de consulter son message sans post-traitement. Dans ce cas, le service de messagerie fournit le message d'origine sans aucun post-traitement.

## Revendications

1. Système de messagerie multimédia, comprenant une messagerie (10) apte à recevoir un message multimédia provenant d'un terminal (A) d'un appelant et à le transmettre à un terminal (B1,B2,B3) d'un appelé abonné (B) audit système de messagerie multimédia, **caractérisé en ce que**, ledit appelé (B) disposant d'au moins un terminal (B1,B2,B3) fonctionnant selon une configuration de communication donnée, ledit système de messagerie comprend des moyens d'adaptation destinés à transmettre ledit message multimédia audit terminal (B1,B2,B3) d'abonné (B) en fonction de modalités de communication associées à ladite configuration de communication et des moyens de traitement de qualité dudit message multimédia.

2. Système de messagerie multimédia selon la revendication 1, **caractérisé en ce que**, lesdites modalités concernant le débit de communication, lesdits moyens d'adaptation comprennent des moyens de scalabilité.

3. Système de messagerie multimédia selon la revendication 2, **caractérisé en ce que** lesdits moyens de scalabilité sont appliqués lors de la réception du message multimédia.

4. Système de messagerie multimédia selon la revendication 2, **caractérisé en ce que** lesdits moyens de scalabilité sont appliqués après réception du message multimédia.

5. Système de messagerie multimédia selon la revendication 2, **caractérisé en ce que** lesdits moyens de scalabilité sont appliqués lors de la consultation du message multimédia.

6. Système de messagerie multimédia selon l'une quelconque des revendications 1 à 5, **caractérisé en ce que**, lesdites modalités concernant la taille d'images, lesdits moyens d'adaptation comprennent des moyens de conversion d'images.

7. Système de messagerie multimédia selon l'une des revendications 1 à 6, **caractérisé en ce que** lesdits moyens de traitement de qualité comprennent, séparément ou en combinaison, des moyens de suppression de bruit, des moyens de suppression des effets du codage des médias, des moyens d'amélioration de la compression, des moyens d'ajout de fluidité, des moyens de correction d'erreurs de transmission.

8. Système de messagerie multimédia selon l'une quelconque des revendications 1 à 7, **caractérisé en ce que** ledit système de messagerie comprend des moyens d'insertion d'annonces dans le message multimédia.

9. Système de messagerie multimédia selon l'une quelconque des revendications 1 à 8, **caractérisé en ce que** ladite messagerie (10) dispose de moyens de sélection par l'appelé abonné (B) desdits moyens d'adaptation et/ou desdits moyens de traitement de qualité, l'ensemble des moyens sélectionnés constituant un abonnement pour l'appelé (B).

10. Système de messagerie multimédia selon la revendication 9, **caractérisé en ce que** ladite messagerie (10) comprend des moyens de dérogation de l'appelé abonné (B) à son abonnement.
